# DEMANDE DE BREVET EUROPEEN

(11) **EP 1 195 319 A1**
(43) Date de publication de la demande: **10.04.2002**
(21) Numéro de dépôt: 01490042.7
(22) Date de dépôt: 08.10.2001
(51) Int. Cl.: B62K 15/00, B62K 5/04

(54) **Cycle pliant**

(30) Priorité: 06.10.2000 FR 0012834
(71) Demandeur: PROMILES, 59650 Villeneuve D'Ascq (FR)
(72) Inventeur: Perruchot, Yann, 59185 Provin (FR)
(74) Mandataire: Hennion, Jean-Claude

(57) **Abrégé**

Le cycle de l'invention se plie entre une position normale d'utilisation et une position repliée de transport. Son cadre (1) est composé de trois éléments (2,4,5) principaux , à savoir un premier élément (2) et un second élément (4) qui sont reliés tous les deux au troisième élément (5) par un premier (7) et un second (8) pivots de pliage. De plus le cycle comporte des moyens de fixation temporaire du premier (2) et du second (4) éléments , lorsqu'il est en position normale d'utilisation, selon un axe de fixation (10), ledit axe (10) et les deux axes (11,12) de pivotement des pivots (7,8) de pliage étant disposés selon les trois sommets d'un triangle et étant parallèles aux axes de rotation des roues. Enfin un des trois éléments principaux (2,4,5) comporte une portion évidée dans laquelle l'un et/ou l'autre des deux autres éléments vient se loger au moins partiellement lorsque le cycle est en position repliée de transport.

## Description

La présente invention concerne un cycle qui est articulé pour pouvoir être replié sur lui-même entre une position normale d'utilisation et une position de transport. Il peut s'agir d'une bicyclette ou encore d'un tricycle , le couple de deux roues étant disposé à l'arrière ou à l'avant.

Pour le transport des cycles, on connaît bien sûr les dispositifs du type porte-vélo qui sont susceptibles d'être montés soit sur le toit soit sur l'arrière d'un véhicule automobile. Cette solution nécessite d'une part l'acquisition d'un matériel supplémentaire et d'autre part le montage de ce matériel sur le véhicule automobile.

Face à ce problème , on a déjà proposé des vélos pliants , c'est-à-dire des vélos comportant une articulation permettant de replier le vélo sur lui-même de manière à diminuer son encombrement et à pouvoir le loger dans le coffre du véhicule automobile. Généralement l'articulation se situe dans le cadre à proximité du pédalier, l'axe de pivotement étant vertical , c'est-à-dire perpendiculaire à l'axe de rotation des roues. Ainsi en position repliée , on vient superposer la partie avant du cadre avec le support guidon et la fourche avant sur la partie arrière du cadre . On diminue ainsi la longueur du vélo tout en , corrélativement , augmentant son encombrement en épaisseur.

Dans le cas d'un tricycle , avec deux roues avant et une roue arrière , on a déjà proposé par le document JP.11-334671 , de replier ledit tricycle selon des articulations dont l'axe est parallèle aux axes de rotation des roues et du pédalier. Dans ce document, le tricycle est composé d'un nombre très important d'éléments qui sont tous reliés les uns aux autres par des pivots parallèles aux axes de rotation des roues avant et arrière. Lorsque le tricycle est replié sur lui-même l'élément portant la roue arrière pivote de manière à ce que ladite roue vienne se placer entre les deux roues avant et légèrement au-dessus de celle-ci. Dans le même temps l'élément support de selle a été replié vers l'élément supportant le guidon et les roues avant en rabattant les uns vers les autres trois éléments d'articulation reliés les uns aux autres et aux éléments support de selle et support de guidon.

La structure du tricycle décrit dans ce document JP.11-334671 est particulièrement complexe .

On a proposé dans le document US.4.718.688 un vélo pliant , ayant une structure simplifiée, dans lequel le cadre triangulaire est formé de trois montants sensiblement rectilignes , à savoir un montant arrière A, supportant la selle S et la roue arrière W₂, un montant avant B, supportant le guidon et la roue avant W₁ et un montant inférieur C de préférence supportant le pédalier 3. Les montants avant B et arrière A sont reliés , à leurs extrémités opposées aux roues avant W₁ et arrière W₂, par une liaison à pivot. Les montants arrière A et inférieur C sont reliés, au niveau de l'axe de la roue arrière W₂, par une liaison à pivot. Les montants avant B et inférieur C sont reliés par un moyen de fixation temporaire J. Pour passer de la position normale d'utilisation à la position repliée , l'utilisateur actionne les moyens de fixation temporaire , replie le montant inférieur C contre le montant arrière A et replie le montant avant A contre le montant arrière M. Les extrémités des montants avant B et arrière A supportant les roues W₁ et W₂ sont décalées de manière à ce que les deux roues W₁ et W₂ soient côte à côté dans la position du vélo repliée.

Une telle structure présente malgré tout des inconvénients. Le vélo a une configuration générale qui n'est pas du tout celle d'un vélo conventionnel. La selle n'est pas une selle classique , montée à l'extrémité d'une tige de selle. Les extrémités supérieures des montants avant B et arrière A, avec le pivot de pliage, se trouvent devant l'abdomen de l'utilisateur lorsque celui-ci est assis sur la selle, ce qui est une gêne manifeste. Les roues sont de taille réduite par rapport aux vélos conventionnels. Enfin une telle structure n'est pas adaptable à un tricycle.

Le but de l'invention est de proposer un cycle , que ce soit une bicyclette ou un tricycle , qui pallie les inconvénients précités , à la fois du tricycle du document EP.11.334671 et du vélo du document US.4.718.688.

Le cycle selon l'invention est un cycle pliant entre une position normale d'utilisation et une position repliée de transport dont le cadre , de manière connue par le document US.4.718.688 est composé exclusivement de trois éléments principaux , à savoir un premier élément et un second élément qui sont reliés tous les deux au troisième élément par un premier et un second pivots de pliage ; de plus le cycle comporte des moyens de fixation temporaire du premier et du second éléments , lorsque le cycle est en position normale d'utilisation, selon un axe de fixation , ledit axe de fixation et les deux axes de pivotement des pivots de pliage étant parallèles aux axes de rotation des roues et étant disposés selon les trois sommets d'un triangle. De manière caractéristique, selon l'invention, l'un des trois éléments principaux comporte une portion évidée dans laquelle l'un et/ou l'autre des deux autres éléments est au moins partiellement logé lorsque le cycle est en position repliée de transport.

Ainsi pour passer de la position normale d'utilisation à la position repliée de transport, il suffit à l'utilisateur de débloquer les moyens de fixation reliant temporairement le premier et le second éléments et ensuite de faire pivoter le premier et le second éléments vers le troisième élément de manière à ce que l'ensemble des trois dits éléments occupent un minimum de place, s'imbriquant les uns dans les autres. Par exemple, le second (ou premier) élément comporte, entre le pivot le reliant au troisième élément et le moyen de fixation temporaire, une portion évidée dans laquelle passe le premier (ou second) élément au moins lorsque, après avoir débloqué les moyens de fixation, on replie le premier élément vers le troisième.

Dans un mode préféré de réalisation, le premier élément du cadre supporte le guidon et la roue avant (ou les deux roues avant s'agissant d'un premier type de tricycle) et le troisième élément du cadre supporte le pédalier et la roue arrière (ou les deux roues arrière s'agissant d'un autre type de tricycle).

Dans le cas où la portion évidée est formée dans le premier élément supportant le guidon et la roue avant , de préférence la portion évidée est délimitée par deux bras dont les extrémités libres sont montées sur le premier pivot de pliage, reliant le premier et le troisième éléments.

Dans le cas où la portion évidée est formée dans le second élément du cadre, supportant éventuellement la selle, de préférence la portion évidée est délimitée par deux bras formant fourche de fixation, les deux extrémités libres des deux dits bras étant apte à être bloquée par les moyens de fixation de part et d'autre du premier élément selon l'axe de fixation. Lorsque les moyens de fixation ont été débloqués , et lorsque l'on replie le premier élément vers le troisième, le premier élément passe entre les deux bras de la fourche de fixation, ce qui diminue considérablement l'encombrement du cycle en position repliée.

De préférence l'axe de fixation est un axe qui traverse transversalement le premier élément et dont les deux extrémités sont filetées ; de plus chaque extrémité libre des deux bras de la fourche de fixation est pourvue d'une encoche apte à être pénétrée par l'axe de fixation ; enfin un système de blocage ,notamment du type écrou, est apte à bloquer les deux bras de la fourche de fixation sur l'axe de fixation lorsque ce dernier a pénétré les deux encoches.

Une difficulté particulière peut survenir dans le cas où la mise en oeuvre des moyens de fixation n'a pas été réalisée dans des conditions adéquates par l'utilisateur . Dans ce cas lorsque celui-ci utilise le cycle, il peut y avoir désolidarisation intempestive des premier et second éléments , génératrice d'accidents. Bien sûr il est de la responsabilité de l'utilisateur de veiller à ce que les moyens de fixation assurent de manière fiable le blocage des premier et second éléments l'un par rapport à l'autre. Cependant afin de limiter les risques d'accidents en cas de mauvaise manipulation de la part de l'utilisateur , il est proposé un mode particulier de réalisation du second élément du cadre qui supporte la selle et qui comporte, au-delà du pivot de pliage un prolongement dont l'extrémité libre est munie d'une encoche apte à être pénétrée par l'axe de fixation supporté par le premier élément du cadre qui supporte le guidon et la roue avant (ou les deux roues avant s'agissant d'un premier type de tricycle). Dans ce cas d'une part la partie du second élément du cadre supportant la selle est , en position normale d'utilisation, inclinée vers l'arrière par rapport au pivot de pliage correspondant et d'autre part l'encoche pratiquée à l'extrémité libre du prolongement est tournée vers le haut. Selon cette configuration particulière , lorsque l'utilisateur est assis sur la selle , son poids s'applique en arrière du pivot ce qui a tendance à faire se relever le prolongement du second élément , relèvement qui est empêché par la présence de l'axe de fixation. Ainsi même si la fixation du premier et du second éléments n'est pas parfaite, le positionnement naturel de l'utilisateur sur la selle de son cycle va empêcher la désolidarisation de ces premier et second éléments l'un par rapport à l'autre.

Pour diminuer au maximum l'encombrement du cycle pliant , l'utilisateur est amené à démonter les roues. S'agissant d'une bicyclette , le cadre dans sa position repliée de transport , peut être disposé couché dans le coffre ou encore placé dans un emballage approprié.

S'agissant d'un tricycle dont le troisième élément du cadre supporte le pédalier et les deux roues arrière , de préférence les deux dites roues sont amovibles, par un système d'embrayage , par rapport à l'axe central portant les pignons en prise avec la chaîne d'entraînement reliée au pédalier. En effet alors qu'il est particulièrement simple de démonter une roue avant indépendante soit d'un vélo soit d'un tricycle , et un peu plus complexe de démonter la roue arrière d'un vélo portant les pignons d'entraînement , cette opération devient impossible lorsqu'il s'agit de démonter les deux roues arrière supportées par l'axe central portant le ou les pignons d'entraînement sauf de prévoir, comme cela est préféré dans le cadre de la présente invention ,que ces deux roues sont amovibles , par un système d'embrayage, par rapport à cet axe central.

Avantageusement dans ce cas , le troisième élément a son extrémité avant qui est conformée pour constituer un pied d'appui tandis que les extrémités arrière supportant l'axe central sont reliées par une barre d'appui, disposée de telle sorte que le pédalier et les pignons d'entraînement ne touchent pas le sol lorsque le tricycle repose sur le pied et la barre d'appui. Il suffit à l'utilisateur, de réaliser les opérations de repliement des premier et second éléments sur le troisième , de retirer la roue avant et les deux roues arrière et de placer le tricycle de manière à ce que le pied et la barre d'appui s'appliquent sur un support plan pour obtenir l'encombrement minimum recherché.

Dans un mode préféré de réalisation, visant à optimiser la réduction de l'encombrement en position repliée , le troisième élément qui supporte le pédalier et la roue arrière (ou les deux roues arrière selon un autre type de tricycle) comporte une tige principale recourbée vers le bas, depuis l'arrière vers l'avant, sur laquelle sont fixées les deux porte-pivots de pliage et le support de pédalier ; de plus le premier élément qui supporte le guidon et la roue avant (ou les deux roues avant selon un type de tricycle) comporte une tige principale entre le premier pivot de pliage et la tige support guidon , ladite tige principale étant recourbée de manière à ce que les deux tiges principales recourbées aient une courbure similaire et forment entre-elles un angle minimal de l'ordre de quelques degrés lorsque le cycle est en position repliée de transport. Il pourrait même être possible, les deux tiges principales ayant la même courbure , d'avoir un angle qui soit nul , les deux tiges principales étant alors strictement parallèles . Dans le cas où les deux porte-pivots de pliage sont fixés sur la face supérieure de la tige principale du troisième élément, on a un écartement entre les deux tiges qui est dû à l'encombrement d'un ou des porte-pivots. On peut obtenir un écartement entre les deux tiges qui soit nul en réalisant la fixation du porte-pivot, générant l'encombrement, sur la face inférieure de la tige principale du troisième élément.

La présente invention sera mieux comprise à la lecture de la description qui va être faite de plusieurs exemples de réalisation d'un cycle pliant de structure simple et à encombrement réduit, illustrés par le dessin annexé dans lequel :
- Les figures 1 à 6 sont des représentations schématiques , en plan , extrêmement simplifiées montrant la structure de trois exemples de réalisation de cycle pliant , en position normale d'utilisation (figures 1, 3 et 5) et en position repliée de transport (figures 2, 4 et 6),
- La figure 7 est une représentation plus détaillée de côté du premier exemple de réalisation, en position normale d'utilisation,
- La figure 8 est une représentation en perspective de l'élément supportant la selle du premier exemple de réalisation, illustré à la figure 5,
- La figure 9 est une vue schématique en plan d'un tricycle pliant ayant la structure du premier exemple , en position repliée à l'état de transport, les roues étant démontées, et
- La figure 10 est une vue détaillée de côté du troisième exemple de réalisation, en position normale d'utilisation.

La particularité du cycle pliant de l'invention réside dans le fait que le cadre est composé exclusivement de trois éléments principaux reliés les uns aux autres par trois axes parallèles aux axes de rotation des roues ; deux axes, montés sur des pivots, constituent des axes de pivotement lors du repliement du cycle sur lui-même et le troisième constitue l'axe de fixation selon lequel est réalisé le blocage en position des trois éléments les uns par rapport aux autres dans la position normale d'utilisation. Ces trois axes constituent les sommets d'un triangle. D'une manière générale lorsque l'on fait passer le cycle de sa position normale d'utilisation à sa position repliée de transport, on effectue d'abord la désolidarisation du premier et du second éléments au niveau de l'axe de fixation, puis on rabat le premier et le second éléments vers le troisième en les faisant pivoter autour de l'axe des premier et second pivots. Le minimum d'encombrement est obtenu du fait du recoupement de certains des éléments, grâce à une portion évidée prévue dans l'un des trois éléments, de sorte que lorsqu'on replie le premier élément vers le troisième, ladite portion évidée serve de logement au moins partiel pour l'un et/ou l'autre des deux autres éléments.

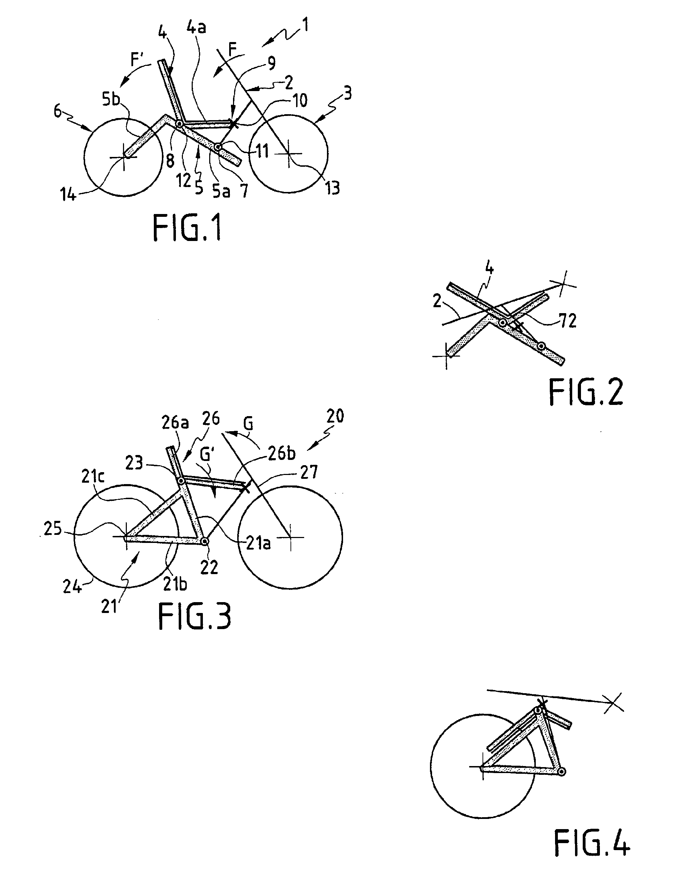

On a représenté aux figures 1 à 6 trois exemples de réalisation basés sur le concept général rappelé ci-dessus.

Par mesure de simplification, dans un premier temps , il sera considéré qu'il s'agit d'une bicyclette avec une roue avant et une roue arrière. Cependant l'invention se rapporte sans restriction au tricycle dans la version avec une roue avant et deux roues arrière ou dans la version avec deux roues avant et une roue arrière.

Dans le premier exemple de réalisation (figures 1 et 2), le cycle 1 est composé de trois éléments principaux , respectivement le premier élément 2 qui supporte le guidon (non représenté) et la roue avant 3, le second élément 4 qui supporte la selle (non représentée ) et le troisième élément 5 qui supporte le pédalier (non représenté) et la roue arrière 6. Un premier pivot de pliage 7 relie à pivotement le premier élément 2 et le troisième élément 5 et un second pivot de pliage 8 relie à pivotement le second élément 4 et le troisième élément 5. Des moyens de fixation temporaire 9 sont prévus pour bloquer en position le premier élément 2 et le second élément 4 selon un axe de fixation 10. Cet axe de fixation 10 et les deux axes de pivotement 11 et 12 du premier et du second pivots de pliage 7 , 8 sont parallèles aux axes de rotation 13,14 des roues 3,6 et forment les trois sommets d'un triangle.

Sur la figure 2 on a représenté la position respective des premier et second éléments 2 , 4 lorsqu'ils sont rabattus par pivotement autour des axes 11, 12 par rapport au troisième élément 5, en position repliée de transport , ce repliement étant effectué suivant les flèches F et F' de la figure 1.

Comme on peut le constater à l'examen de la figure 2, le minimum d'encombrement est obtenu du fait notamment du recoupement du premier et du second éléments 2,4 , ce recoupement étant symbolisé sur la figure 2 par le point d'intersection 72. Ceci n'est possible qu'en adaptant la structure des premier et second éléments 2, 4.

Dans un premier mode de réalisation, ce recoupement est rendu possible par le fait que le second élément 4 comporte entre le second pivot 8 et les moyens de fixation 10 une portion évidée, dans laquelle peut passer le premier élément en position repliée. Dans l'exemple qui sera détaillé ci-après, cette portion évidée est constituée par un prolongement 4a composé de deux branches formant une fourche,écartées les unes des autres entre lesquelles passe le premier élément 2 en position repliée.

Dans un second mode de réalisation, ce recoupement est rendu possible par le fait que le premier élément 2 comporte une portion évidée à travers laquelle passent en position repliée le second élément et éventuellement une partie du troisième élément.

Cette remarque vaut à l'identique pour les autres exemples de réalisation qui sont illustrés aux figures 3 à 6 puisqu'il y a de la même manière un recoupement entre les premier et second éléments en position repliée de transport.

Dans ce premier exemple de réalisation, le troisième élément qui comporte les deux pivots de pliage 7, 8 est constitué par la partie du cadre qui supporte le pédalier et la roue arrière. Les pivots 7 , 8 sont montés sur la tige principale Sa de ce troisième élément 5, ledit élément comportant un prolongement coudé 5b à deux branches entre lesquelles est disposée la roue arrière 6. Lors du repliement , le premier élément 2 et le second élément 4 pivotent dans le même sens , selon les flèches F, F'.

La configuration particulière de ce troisième élément 5 est plutôt adaptée aux tricycles comportant deux roues arrière , comme dans l'exemple qui sera décrit de manière plus détaillée ci-après.

Dans le second exemple de réalisation illustré aux figures 3 et 4, le troisième élément 21 sur lequel sont montés les deux pivots de pliage 22,23 est également , comme dans le premier exemple , l'élément qui supporte le pédalier et la roue arrière 24. La configuration de ce troisième élément est plus conforme à ce qui est connu dans le domaine des bicyclettes ,avec une tige principale 21a, dans le prolongement de la tige de selle en position normale d'utilisation et deux tiges secondaires 21b, 21c se prolongeant en forme de fourches jusqu'à l'axe de rotation 25 de la roue arrière 24. Dans le cas illustré à la figure 3, les deux pivots 22,23 sont disposés à proximité du pédalier pour le premier et à proximité de la tige principale 26a du second élément 26 qui forme le support de la tige de selle.

Lors du repliement du cycle 20 , les pivotements respectifs du premier élément 27 et du second élément 26 se font en sens inverse, comme illustré par les flèches G et G'. On comprend que le prolongement 26b du second élément 26, lors du pivotement selon la flèche G', et pour obtenir le placement illustré à la figure 4, doit nécessairement être constitué d'une fourche à deux branches pour pouvoir passer de part et d'autre du troisième élément 21.

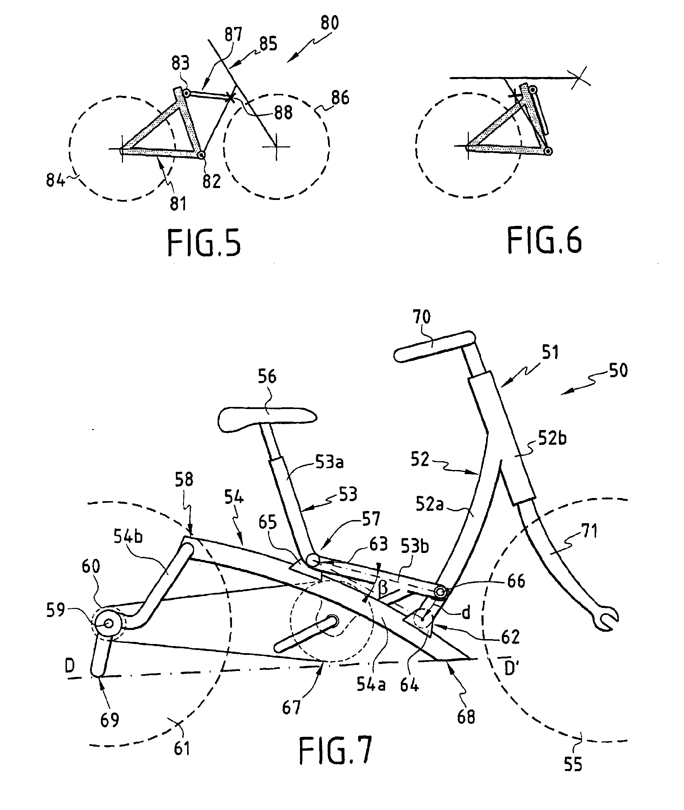

Dans le troisième exemple de réalisation (figures 5 et 6), le troisième élément 81 du cycle 80 , sur lequel sont montés les deux pivots de pliage 82,83 et l'élément qui supporte à la fois la roue arrière 84, le pédalier et la selle. Le premier élément 85 supporte la roue avant 86 et le guidon. Le second élément 87 constitue une simple entretoise s'étendant entre le second pivot de pliage 83 et l'axe de fixation 88, ledit axe 88 reliant le premier élément 85 au second 87. En fait la structure générale de ce cinquième exemple de réalisation est proche de celle du second exemple exception faite que la partie du cadre supportant la selle est intégrée dans le troisième élément et non plus dans le second.

En examinant sur les figures 3 et 5 la structure de ces deux derniers exemples de réalisation, on peut constater que le cadre a globalement la même configuration qui est tout-à-fait similaire à la configuration habituelle des bicyclettes. Les trois axes portés par les trois éléments constitutifs du cadre selon l'invention sont également placés sensiblement aux mêmes emplacements , formant les trois sommets d'un triangle dont le sommet inférieur est sensiblement au niveau du pédalier et dont les trois côtés sont constitués par les trois tubes principaux du cadre.

La différence essentielle entre ces deux exemples de réalisation consiste dans l'emplacement respectif des deux pivots et de l'axe de fixation. On peut constater à l'examen des figures 4 et 6 que cette différence induit des configurations différentes du cycle en position repliée de transport.

On va maintenant décrire de manière plus complète un tricycle dont la structure est conforme au premier exemple de réalisation et qui comporte deux roues arrière, puis une bicyclette dont la structure est conforme au troisième exemple de réalisation.

Le tricycle 50 comporte un cadre 51, qui est composé de trois éléments distincts 52,53,54. Le premier élément 52 comporte une tige principale 52a qui , dans l'exemple illustré à la figure 7 est légèrement recourbé et une tige secondaire 52b sur laquelle sont montés respectivement le guidon 70 et la fourche 71 supportant la roue avant 55.

Le second élément 53 du cadre 51 est composé d'une tige principale 53a sur l'extrémité de laquelle est montée la selle 56 et un prolongement tourné vers l'avant 53b et formant un coude 57 avec la tige principale 53a.

Le troisième élément 54 du cadre 51 comporte une tige principale 54a et un prolongement tourné vers l'arrière au-delà d'un coude 58. Ce prolongement arrière est formé de deux bras 54b s'étendant de part et d'autre de l'extrémité arrière de la tige principale 54a. L'axe central 59 sur lequel sont montés le pignon d'entraînement 60 et les deux roues arrière 61 est monté à rotation entre les extrémités des deux bras 54b du troisième élément 54.

Sur la face supérieure de la tige principale 54a de ce troisième élément 54 sont fixés les deux pivots de pliage 62, 63. Le premier pivot 62 qui se trouve à proximité de la partie avant de la tige principale 54a relie le troisième élément 54 à l'extrémité de la tige principale 52a du premier élément 52. Le second pivot de pliage 63 est fixé sur la tige principale 54a du troisième élément 54 en arrière du premier pivot 62. L'axe de pivotement de ce second pivot 63 se trouve également au niveau de la portion coudée 57 entre la tige principale 53a et le prolongement avant 53b du second élément.

Pour chacun de ces deux pivots 62,63, une pièce en U 64,65 est fixée sur la face supérieure de la tige principale 54a, cette pièce supportant le pivot proprement dit et l'axe de pivotement , les deux axes de pivotement étant parallèles aux axes de rotation des roues 55 et 61.

Le blocage en position des trois éléments principaux 52,53,54 du cadre 51 est réalisé selon un axe de fixation 66 qui est monté transversalement à la tige principale 52a du premier élément 52, à une distance d de l'axe de pivotement du premier pivot 62. C'est l'extrémité libre du prolongement 53b qui coopère, sur l'axe de fixation 66, avec des moyens de fixation pour obtenir la fixation temporaire du second élément 53 sur le premier élément 52 et donc le blocage des trois éléments principaux 52,53,54 du cadre dans la position normale d'utilisation, du fait de la conformation triangulaire des trois axes (fixation et pivotement).

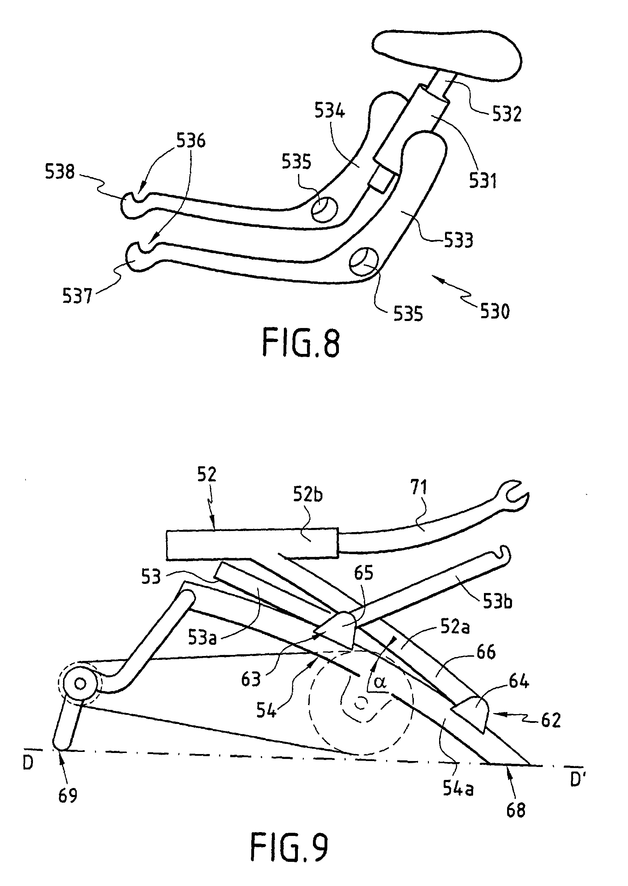

Dans un exemple de réalisation préféré, qui est illustré à la figure 8 , le second élément 530 est constitué d'un tube central 531 dans lequel peut être montée la tige de selle 532, et de deux bras coudés 533, 534 , présentant au niveau de la portion coudée des évidements circulaires 535 tandis qu'aux extrémités 537,538 des bras coudés 533, 534 sont prévues deux encoches 536 tournées vers le haut. Le pivot proprement dit, monté sur la pièce en U 65, est disposé en regard des deux évidements 535 permettant au second élément 530 de pivoter à la fois vers l'avant et à la fois vers l'arrière par rapport au troisième élément 54.

Les encoches 536 sont aménagées pour que l'axe de fixation 66 puisse y pénétrer, puis y être fixé par tout moyen approprié de fixation pour réaliser le blocage recherché. De préférence l'axe de fixation comporte des portions filetées à ses deux extrémités , de part et d'autre de la tige principale 52a et un système d'écrou permet , par vissage sur ces portions filetées de bloquer les deux extrémités libres 537,538 des bras 533, 534 contre la tige principale 52a du premier élément 52. Le système d'écrou peut être du type de celui utilisé couramment pour le blocage des roues de bicyclette .

La position des encoches 536, tournées vers le haut , permet de limiter les risques d'une désolidarisation des trois éléments principaux 52,53,54 dans le cas où la fixation du premier et du second élément 52,53 aurait été défectueuse , notamment par un mauvais serrage du système d'écrou. En effet, lorsque l'utilisateur est assis sur la selle 56, la position inclinée vers l'arrière par rapport au premier pivot 63 de ladite selle tend à faire remonter vers le haut les deux bras 533, 534, cette remontée étant empêchée par la présence de l'axe de fixation 66 et ce quand bien même le système d'écrou serait mal vissé sur cet axe de fixation 66.

L'ensemble pédalier 67 est fixé sous la face inférieure de la tige principale 54a du troisième élément 54, entre les deux pivots de pliage 62,63. En position normale d'utilisation telle que représentée à la figure 7 , les axes de rotation des deux roues 55,61 et du pédalier 67 sont sensiblement alignés.

Dans un mode préféré de réalisation , le tricycle 50 présente une position stable d'appui sur le sol, sans nécessiter l'assistance de l'utilisateur, une fois que celui-ci a enlevé les trois roues. Cette position stable est obtenue grâce à un pied d'appui avant 68 et à une barre d'appui arrière 69. Le pied d'appui avant 68 est constitué par l'extrémité avant de la tige principale 54a du troisième élément 54, au-delà du premier pivot de pliage 62. La barre d'appui arrière 69 est constituée par une barre en U dont les deux branches supérieures du U sont reliées aux extrémités des deux bras latéraux 54b constituant le prolongement arrière du troisième élément 54, au niveau de l'axe central de rotation 59. C'est la base du U qui constitue en réalité la barre d'appui arrière 69. Le plan DD' passant par la base du pied d'appui avant 68 et la base de la barre d'appui arrière 69 se trouve sous le pédalier 67 (figure 7).

On a représenté sur la figure 9 le tricycle pliant 50 de la figure 11 à l'état replié de transport. L'utilisateur peut si nécessaire retirer par desserrage et coulissement d'une part le guidon 70 et la selle 56. Il déverrouille , grâce notamment au système d'écrou , le blocage en position du premier élément 52 et du second élément 53 au niveau de l'axe de fixation 66. Il bascule vers l'arrière le second élément 53, puis également vers l'arrière le premier élément 52, la tige principale 52a du premier élément 52 passant entre les deux bras 533,534 du second élément 53. Dans cette position repliée , la tige principale 52a du premier élément 52 repose sur le second pivot 63 qui en l'occurrence déborde sur la face supérieure de la tige principale 54a du troisième élément 54. Ensuite, l'utilisateur retire la roue avant 55 et les deux roues arrière 61 et repose le cadre 51 sur le sol grâce au pied avant 68 et à la barre arrière 69 d'appui.

De préférence, comme illustré aux figures 7 et 9 , les deux tiges principales respectivement 52a et 54a du premier et du troisième éléments 52 et 54 ont sensiblement la même courbure de manière à ce qu'en position repliée la tige principale 52a du premier élément 52 forme un angle α le plus faible possible avec la tige principale 54a du troisième élément 54. Par ailleurs, dans cette configuration, lorsque le tricycle est posé à plat sur un plan horizontal DD', la tige secondaire 52b supportant la fourche 71 est sensiblement horizontale, définissant l'encombrement en hauteur du tricycle replié ; par ailleurs, elle ne dépasse pas au-delà du troisième élément 54 qui définit l'encombrement en longueur du tricycle replié. On a un encombrement minimal, qui est en particulier dû à l'emplacement du premier pivot de pliage 62 , vers l'avant de la tige principale du troisième élément et proche du plan DD' d'appui.

De plus, et ceci de manière générale, l'encombrement minimal est lié à la configuration du triangle formé par les deux pivots de pliage et par l'axe de fixation. Il est préférable que ce triangle ait les plus petites dimensions possibles, ces dites dimensions étant cependant différentes selon qu'il s'agit d'un cycle pour adulte ou pour junior. De préférence, le triangle en question a un angle de faible valeur β, notamment compris entre 13 et 20°, entre deux côtés faisant entre 200 et 300mm. A titre d'exemple dans un cycle de version adulte, le triangle a un angle β de l'ordre de 18° entre deux côtés faisant de l'ordre de respectivement 270 et 280mm (d est alors de l'ordre de 85mm) ; dans un cycle de version junior, le triangle a un angle β de 15° entre deux côtés faisant respectivement 200 et 215mm (d est alors de 55mm).

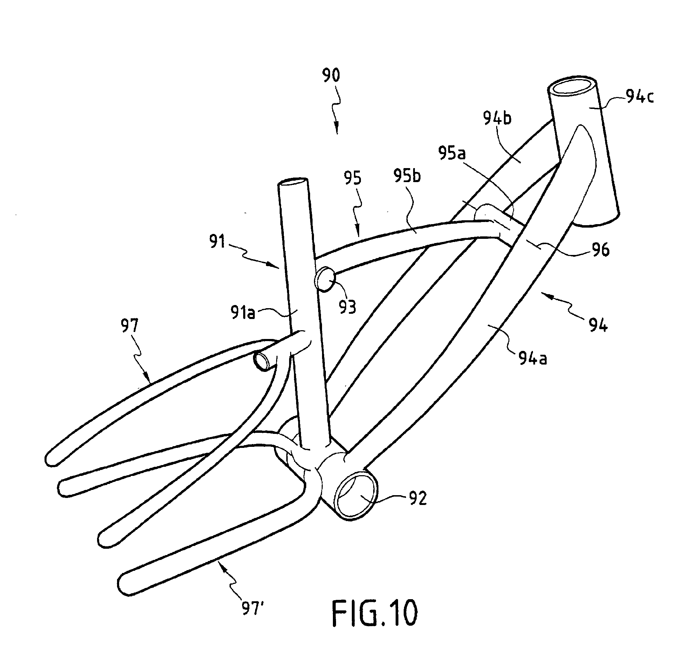

La bicyclette dont la structure est conforme au troisième exemple de réalisation possède un cadre 90 tel qu'illustré à la figure 10. Le troisième élément 91 supporte la selle , la roue arrière et le pédalier ainsi que les deux pivots de pliage 92,93 reliant ledit troisième élément 91 respectivement au premier élément 94 et au second élément 95. Le premier élément 94, qui supporte la roue avant et le guidon a sa tige principale qui est constituée de deux bras 94a et 94b s'étendant depuis la tige secondaire 94c supportant le guidon et la roue avant jusqu'au premier pivot de pliage 92. Le second élément 95 est constitué d'une simple entretoise reliant le second pivot de pliage 93 à l'axe de fixation 96. Ce second élément 95 a une forme en T avec la tête du T 95a qui constitue en partie les moyens de fixation du premier et du second éléments et le montant du T 95b qui constitue la tige principale du second élément et dont l'extrémité opposée à la tête 95a est montée sur le second pivot de pliage 93. La largeur de la tête 95a est déterminée pour venir se loger entre les deux bras 94a et 94b du premier élément 94, le blocage de ladite tête 95a sur les deux dits bras 94a , 94b étant réalisé selon l'axe de fixation 96 grâce à des moyens complémentaires de fixation non représentés sur la figure 10.

Pour le passage de l'état normal d'utilisation tel que représenté à la figure 10 à l'état replié , qui est très schématiquement illustré à la figure 6 , après déverrouillage des moyens de fixation , le second élément 95 bascule autour du second pivot de pliage 93 de sorte que le second élément vient sensiblement le long de la tige principale 91a du troisième élément. Le premier élément 94 pivote autour du premier pivot de pliage 92 en sorte que le second élément 95 passe entre les deux bras 94a et 94b, de même que la tige principale 91a du premier élément 91. Le pivotement angulaire du premier élément 94 va être bloqué dans sa course par la fourche supérieure 97 qui supporte la roue arrière , ladite fourche 97 étant elle-même intégrée au troisième élément 91. Comme on peut le voir sur la figure 6, dans cette configuration à l'état replié , l'encombrement des trois éléments constituant le cadre est particulièrement réduit , la tige secondaire 94c du premier élément 94 supportant le guidon et la fourche de la roue avant étant sensiblement parallèle à la fourche inférieure 97' supportant la roue arrière. Pour obtenir cette configuration optimale , il faut que la longueur de la tige principale 91a du troisième élément soit inférieure à celle des branches 94a et 94b délimitant la portion évidée de manière à ce que le premier élément puisse non seulement pivoter par-dessus le second élément mais également en partie par-dessus le troisième élément.

## Revendications

1. Cycle pliant entre une position normale d'utilisation et une position repliée de transport dont le cadre est composé exclusivement de trois éléments principaux, à savoir un premier élément (2) et un second élément (4) qui sont reliés tous les deux au troisième élément (5) par un premier (7) et un second (8) pivots de pliage, ledit cycle comportant des moyens de fixation temporaire du premier (2) et du second (4) éléments , lorsque le cycle est en position normale d'utilisation, selon un axe de fixation (10), ledit axe (10) et les deux axes (11,12) de pivotement des pivots (7,8) de pliage étant parallèles aux axes de rotation des roues et étant disposés selon les trois sommets d'un triangle, l'un des rois éléments principaux comporte une portion évidée dans laquelle l'un et/ou l'autre des deux autres éléments est au moins partiellement logé lorsque le cycle est en position repliée de transport.

2. Cycle selon la revendication 1 **caractérisé en ce que** le second (ou premier) (4 ou 2) élément comporte, entre le pivot (8 ou 7) le reliant au troisième élément (5) et le moyen de fixation temporaire , une portion évidée dans laquelle passe le premier (ou second) élément (2 ou 4) au moins lorsque , après avoir débloqué les moyens de fixation, on replie le premier élément vers le troisième.

3. Cycle selon l'une des revendications 1 ou 2 **caractérisé en ce que** le premier élément (2) du cadre (1) supporte le guidon et la roue avant (ou les deux roues avant s'agissant d'un premier type de tricycle), le second élément (4) du cadre (1) supporte la selle et le troisième élément (5) du cadre (1) supporte le pédalier et la roue arrière (ou les deux roues arrière s'agissant d'un autre type de tricycle).

4. Cycle selon l'une des revendications 1 ou 2 **caractérisé en ce que** le premier élément du cadre supporte le guidon et la roue avant et le troisième élément du cadre supporte la selle , le pédalier et la roue arrière, le second élément constituant une simple entretoise entre le premier et le troisième éléments.

5. Cycle selon l'une des revendications 2 à 4 **caractérisé en ce que** la portion évidée du second élément est délimitée par deux bras formant fourche de fixation, les deux extrémités libres des deux dits bras étant aptes à être bloquées par les moyens de fixation de part et d'autre du premier élément selon l'axe de fixation.

6. Cycle selon l'une des revendications 2 à 4 **caractérisé en ce que** l'axe de fixation (10) est un axe qui traverse transversalement le premier élément (2) et dont les deux extrémités sont filetées, **en ce que** chaque extrémité libre des deux bras de la fourche de fixation est pourvue d'une encoche apte à être pénétrée par l'axe de fixation, et **en ce qu'**un système de blocage, notamment du type écrou, est apte à bloquer les deux bras de la fourche de fixation sur l'axe de fixation (10) lorsque ce dernier a pénétré les deux encoches.

7. Cycle selon les revendications 2 et 4 **caractérisé en ce que** la portion évidée du premier élément est délimitée par deux bras dont les extrémités libres sont montées sur le premier pivot de pliage reliant le premier et le troisième éléments.

8. Cycle selon la revendication 1 **caractérisé en ce que** le second élément (530) du cadre (50) supporte la selle (56) et comporte , au-delà du second pivot de pliage (57) un prolongement (533,534) dont l'extrémité libre est munie d'une encoche (536) apte à être pénétrée par l'axe de fixation (66) supporté par le premier élément (52) du cadre (50) qui supporte le guidon (70) et la roue avant (ou les deux roues avant s'agissant d'un premier cycle de tricycle) ,et **en ce que** la partie du second élément (530) du cadre supportant la selle est, en position normale d'utilisation, inclinée vers l'arrière par rapport au second pivot de pliage et d'autre part l'encoche pratiquée à l'extrémité libre du prolongement est tournée vers le haut.

9. Cycle selon l'une des revendications 1 à 8 **caractérisé en ce que** le triangle dont les sommets sont les deux pivots de pliage et l'axe de fixation est de dimension réduite.

10. Cycle selon la revendication 9 **caractérisé en ce que** ledit triangle a un angle au sommet β compris entre 13 et 20° entre deux côtés faisant entre 200 et 300mm.

11. Cycle selon la revendication 10, version adulte, **caractérisé en ce que** l'angle β est de l'ordre de 18° entre deux côtés faisant respectivement de l'ordre de 270 et 280mm.

12. Cycle selon la revendication 10, version junior, **caractérisé en ce que** l'angle β est de l'ordre de 15° entre deux côtés faisant respectivement de l'ordre de 210 et 215mm.

13. Tricycle selon l'une des revendications 1 à 12 ,dont le troisième élément (54) du cadre (51) supporte le pédalier (67) et les deux roues arrière (61),**caractérisé en ce que** les deux dites roues (61) sont amovibles , par un système d'embrayage, par rapport à l'axe central (59) portant les pignons (60) en prise avec la chaîne d'entraînement reliée au pédalier.

14. Tricycle selon la revendication 13 **caractérisé en ce que** le troisième élément (54) a son extrémité avant qui est conformée pour constituer un pied d'appui (68) tandis que les extrémités arrière supportant l'axe central (59) sont reliées par une barre d'appui (69), disposée de telle sorte que le pédalier (67) et les pignons (60) d'entraînement ne touchent pas le sol lorsque le tricycle repose sur le pied (68) et la barre d'appui (60).

15. Cycle selon la revendication 1 et tricycle selon l'une des revendications 13 ou 14 **caractérisés en ce que** le troisième élément (54) qui supporte le pédalier (67) et la roue arrière (ou les deux roues arrière (61) selon un autre type de tricycle) comporte une tige principale (54a) recourbée vers le bas, depuis l'arrière vers l'avant, sur laquelle sont fixées les deux porte-pivots (64,65) de pliage et le support de pédalier (67), **en ce que** le premier élément (52) qui supporte le guidon (70) et la roue avant (55) (ou les deux roues avant selon un type de tricycle) comporte une tige principale (52a) entre le premier pivot de pliage (62) et la tige secondaire (52b) support guidon (70), ladite tige principale (52a) étant recourbée de manière à ce que les deux tiges principales (52a, 54a) recourbées aient une courbure similaire et forment entre-elles un angle minimal (α) de l'ordre de quelques degrés lorsque le cycle est en position repliée de transport.

16. Cycle selon la revendication 15 **caractérisé en ce que** le premier pivot de pliage (62) est vers l'avant de la tige principale (54a) du troisième élément (54).
